(19) Europäisches Patentamt
European Patent Office
Office européen des brevets

(11) **EP 4 585 576 A1**

(12) **EUROPEAN PATENT APPLICATION**
published in accordance with Art. 153(4) EPC

(43) Date of publication:
**16.07.2025  Bulletin 2025/29**

(51) International Patent Classification (IPC):
**C03C 13/02** (2006.01)      **C03C 3/087** (2006.01)

(21) Application number: **23921085.9**

(52) Cooperative Patent Classification (CPC):
**C03C 3/087; C03C 13/00**

(22) Date of filing: **08.02.2023**

(86) International application number:
**PCT/JP2023/004190**

(87) International publication number:
**WO 2024/166253 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: Nitto Boseki Co., Ltd.
**Fukushima-shi,
Fukushima 960-8161 (JP)**

(72) Inventors:
• **NUKUI, Yosuke**
  **Fukushima-shi, Fukushima 960-8161 (JP)**
• **HARASHIMA, Shunsuke**
  **Fukushima-shi, Fukushima 960-8161 (JP)**
• **NAGAMINE, Nobuyoshi**
  **Fukushima-shi, Fukushima 960-8161 (JP)**

(74) Representative: **Schön, Christoph**
  **Dr. Schön, Neymeyr & Partner mbB**
  **Bavariaring 26**
  **80336 München (DE)**

(54) **GLASS COMPOSITION FOR FLAT CROSS-SECTION GLASS FIBERS, FLAT CROSS-SECTION GLASS FIBERS, AND METHOD FOR MANUFACTURING FLAT CROSS-SECTION GLASS FIBERS FROM GLASS MATERIAL CONTAINING GLASS RECYCLING MATERIAL**

(57)      Provided is a glass composition for flat cross-section glass fiber, which can allow flat cross-section glass fiber comprising excellent flattening stability, flattening ratio stability and glass fiber spinning stability to be obtained even when a glass recycling material is used. The glass composition includes 50.00 to 60.00% by mass of $SiO_2$, 9.00 to 18.00% by mass of $Al_2O_3$, 3.00 to 9.00% by mass of $B_2O_3$, 15.00 to 30.00% by mass of CaO, 0.10 to 5.00% by mass of MgO, 0.01 to 1.00% by mass of $Fe_2O_3$, 0.01 to 1.00% by mass of $TiO_2$, and 0.10 to 2.00% by mass in total of $Na_2O$ and $K_2O$, in which $K_2O/Na_2O$ is 0.05 or more and less than 0.50, $MgO/Fe_2O_3$ is 4.10 or more and less than 10.00, and the contents C, M, and T, of CaO, MgO, and $TiO_2$, and the total content NK of $Na_2O$ and $K_2O$ satisfy the following formula (1).

$$3.00 \leq (C \times M \times T/NK)^{1/2} \leq 3.75 \qquad (1)$$

EP 4 585 576 A1

**Description**

Technical Field

The present invention relates to a glass composition for flat cross-section glass fiber, flat cross-section glass fiber, and a method for manufacturing flat cross-section glass fiber from a glass raw material including a glass recycling material.

Background Art

Conventionally, glass fiber has been widely used in various applications in order to improve performance of resin compositions. In recent years, glass fiber which is formed from a characteristic glass composition for glass fiber and which includes a plurality of glass filaments each having a flat cross-sectional shape comprising a major axis of a length in a predetermined range and a minor axis of a length in a predetermined range (hereinafter, may be referred to as flat cross-section glass fiber), as glass fiber, has been increasingly demanded because such glass fiber comprises excellent resin composition reinforcement properties, for example, imparts characteristics derived from the glass composition for glass fiber, to a glass fiber-reinforced molded product, and allows a glass fiber-reinforced resin composition to be improved in tensile strength and impact strength (e.g., see Patent Literature 1).

Among glass compositions for glass fiber, an E glass composition is most universally used, and the amount of production of flat cross-section glass fiber formed from the E glass composition, as flat cross-section glass fiber, is the largest.

The E glass composition has a composition including $SiO_2$ in the range of 52.0 to 56.0% by mass, $Al_2O_3$ in the range of 12.0 to 16.0% by mass, MgO and CaO in the range of 20.0 to 25.0% by mass in total, and $B_2O_3$ in the range of 5.0 to 10.0% by mass with respect to the total amount of the glass composition for glass fiber.

In recent years, due to increasing environmental awareness, reuse of one (glass recycling material) obtained by removing attached substances from glass fiber wastes generated in a manufacturing process and pulverizing the glass fiber wastes, as a glass raw material, has been made. The amount of production of flat cross-section glass fiber formed from an E glass composition, as flat cross-section glass fiber, is the largest, and thus, if such flat cross-section glass fiber formed from an E glass composition can be manufactured with a glass recycling material, contribution to the environment is increased.

Citation List

Patent Literature

Patent Literature 1: International Publication No. WO 2017/171101

Summary of Invention

Technical Problem

However, the glass recycling material includes fine foreign substances, such as platinum and a crushed product of brick, as compared with a pure glass raw material formed from mineral, and such foreign substances have an influence on the productivity of flat cross-section glass fiber, and therefore, for example, a disadvantage is that, in the case where flat cross-section glass fiber formed from a conventional E glass composition, as described in Patent Literature 1, is tried to be manufactured, flattening stability, flattening ratio stability and glass fiber spinning stability are impaired.

An object of the present invention is to provide a glass composition for flat cross-section glass fiber, in which such a disadvantage is resolved and flat cross-section glass fiber comprising excellent flattening stability, flattening ratio stability and glass fiber spinning stability can be obtained even when such flat cross-section glass fiber is manufactured with a glass recycling material.

Another object of the present invention is to provide flat cross-section glass fiber formed from the glass composition for flat cross-section glass fiber, and a method for manufacturing flat cross-section glass fiber from a glass raw material including a glass recycling material.

Solution to Problem

In order to achieve the objects, the glass composition for flat cross-section glass fiber of the present invention includes $SiO_2$ in the range of 50.00 to 60.00% by mass, $Al_2O_3$ in the range of 9.00 to 18.00% by mass, $B_2O_3$ in the range of 3.00 to 9.00% by mass, CaO in the range of 15.00 to 30.00% by mass, MgO in the range of 0.10 to 5.00% by mass, $Fe_2O_3$ in the range of 0.01 to 1.00% by mass, $TiO_2$ in the range of 0.01 to 1.00% by mass, and $Na_2O$ and $K_2O$ in the range of 0.10 to 2.00% by mass in total, with respect to the total amount of the glass composition for flat cross-section glass fiber, in which the ratio ($K_2O/Na_2O$) of the content of $K_2O$ to the content of $Na_2O$ is in the range of 0.05 or more and less than 0.50, the ratio ($MgO/Fe_2O_3$) of the content of MgO to the content of $Fe_2O_3$ is in the range of 4.10 or more and less than 10.00, and C, M, T, and NK satisfy the following formula (1) when the content of CaO is designated as C, the content of MgO is designated as M, the content of $TiO_2$ is designated as T, and the total content of $Na_2O$ and $K_2O$ is designated as NK:

$$3.00 \leq (C \times M \times T/NK)^{1/2} \leq 3.75 \quad (1)$$

According to the glass composition for flat cross-section glass fiber of the present invention, when the contents of $SiO_2$, $Al_2O_3$, $B_2O_3$, CaO, MgO, $Fe_2O_3$ and $TiO_2$ and the total content of $Na_2O$ and $K_2O$, with respect to the total amount of the glass composition for flat cross-section glass fiber, and the ratio ($K_2O/Na_2O$) of the content of $K_2O$ to the content of $Na_2O$ and the ratio ($MgO/Fe_2O_3$) of the content of MgO to the content of $Fe_2O_3$ are each in the above-mentioned range, and C, M, T, and NK satisfy the formula (1), flat cross-section glass fiber comprising excellent flattening stability, flattening ratio stability and glass fiber spinning stability can be obtained even when such flat cross-section glass fiber is manufactured with a glass recycling material.

The flat cross-section glass fiber of the present invention is flat cross-section glass fiber including a plurality of flat cross-section glass filaments each having a flat cross-sectional shape comprising a major axis having a length in a predetermined range and a minor axis having a length in a predetermined range, in which the flat cross-section glass filaments are each formed from the glass composition for flat cross-section glass fiber of the present invention.

According to the flat cross-section glass fiber of the present invention, the flat cross-section glass fiber can comprise excellent flattening stability, flattening ratio stability and glass fiber spinning stability even when manufactured with a glass recycling material.

The method for manufacturing flat cross-section glass fiber from a glass raw material including a glass recycling material of the present invention is a method for manufacturing flat cross-section glass fiber from a glass raw material including a glass recycling material, the method including: obtaining a flat cross-section glass filament having a flat cross-sectional shape comprising a major axis having a length in a predetermined range and a minor axis having a length in a predetermined range by using a glass raw material including a glass recycling material; and bundling a plurality of the flat cross-section glass filaments, in which the glass raw material includes a glass recycling material in the range of 1.0 to 50.0% by mass with respect to the total amount, and the flat cross-section glass filament is formed from the glass composition for flat cross-section glass fiber of the present invention.

According to the method for manufacturing flat cross-section glass fiber from a glass raw material including a glass recycling material of the present invention, flat cross-section glass fiber comprising excellent flattening stability, flattening ratio stability and glass fiber spinning stability can be manufactured even when manufactured with a glass recycling material, as long as the glass recycling material is used in the above-mentioned range with respect to the total amount.

The flat cross-section glass fiber comprising excellent flattening stability means that, when flat cross-section glass fiber is manufactured by melting a glass raw material, withdrawing the obtained molten glass from a bushing comprising 400 nozzle tips at a flow rate of the molten glass passing through one nozzle, of 1.5 g/min, to obtain 400 flat cross-section glass filaments and bundling these flat cross-section glass filaments, the average value of the ratio (major axis/minor axis) of the major axis to the minor axis of the 400 flat cross-section glass filaments constituting the flat cross-section glass fiber is 3.0 or more.

The flat cross-section glass fiber comprising excellent flattening ratio stability means that, when flat cross-section glass fiber is manufactured by melting a glass raw material, withdrawing the obtained molten glass from a bushing comprising 400 nozzle tips at a flow rate of the molten glass passing through one nozzle, of 1.3 g/min, to obtain 400 flat cross-section glass filaments and bundling these flat cross-section glass filaments, a flat cross-section glass filament in which the ratio (major axis/minor axis) of the major axis to the minor axis of the flat cross-section glass filament is 2.0 or less is not included at all in the 400 flat cross-section glass filaments constituting the flat cross-section glass fiber.

The flat cross-section glass fiber comprising excellent glass fiber spinning stability means that, when flat cross-section glass fiber is manufactured continuously for 168 hours by melting a glass raw material, withdrawing the obtained molten glass from a bushing comprising 400 nozzle tips at a flow rate of the molten glass passing through one nozzle, of 1.3 g/min, to obtain 400 flat cross-section glass filaments and bundling these flat cross-section glass filaments, the number of cuts of the flat cross-section glass filaments constituting the flat cross-section glass fiber is 105 or less.

Description of Embodiments

Next, embodiments of the present invention will be described in detail.

The glass composition for flat cross-section glass fiber of the present embodiment includes $SiO_2$ in the range of 50.00 to 60.00% by mass, $Al_2O_3$ in the range of 9.00 to 18.00% by mass, $B_2O_3$ in the range of 3.00 to 9.00% by mass, CaO in the range of 15.00 to 30.00% by mass, MgO in the range of 0.10 to 5.00% by mass, $Fe_2O_3$ in the range of 0.01 to 1.00% by mass, $TiO_2$ in the range of 0.01 to 1.00% by mass, and $Na_2O$ and $K_2O$ in the range of 0.10 to 2.00% by mass in total, with respect to the total amount of the glass composition for flat cross-section glass fiber, in which the ratio ($K_2O/Na_2O$) of the content of $K_2O$ to the content of $Na_2O$ is in the range of 0.05 or more and less than 0.50, the ratio ($MgO/Fe_2O_3$) of the content of MgO to the content of $Fe_2O_3$ is in the range of 4.10 or more and less than 10.00, and C, M, T, and NK satisfy the following formula (1) when the content of CaO is designated as C, the content of MgO is designated as M, the content of $TiO_2$ is designated as T, and the total content of $Na_2O$ and $K_2O$ is designated as NK:

$$3.00 \leq (C \times M \times T/NK)^{1/2} \leq 3.75 \quad (1)$$

According to the glass composition for flat cross-section glass fiber of the present embodiment, when the contents of $SiO_2$, $Al_2O_3$, $B_2O_3$, CaO, MgO, $Fe_2O_3$ and $TiO_2$ and the total content of $Na_2O$ and $K_2O$, with respect to the total amount of the glass composition for flat cross-section glass fiber, and the ratio ($K_2O/Na_2O$) of the content of $K_2O$ to the content of $Na_2O$ and the ratio ($MgO/Fe_2O_3$) of the content of MgO to the content of $Fe_2O_3$ are each in the above-mentioned range, and C, M, T, and NK satisfy the formula (1), flat cross-section glass fiber comprising excellent flattening stability, flattening ratio stability and glass fiber spinning stability can be obtained even when such flat cross-section glass fiber is manufactured with a glass recycling material.

When the glass composition for flat cross-section glass fiber of the present embodiment has a content of $SiO_2$ of less than 50.00% by mass with respect to the total amount of the glass composition for flat cross-section glass fiber, the mechanical strength of the flat cross-section glass fiber formed from the glass composition for flat cross-section glass fiber is greatly reduced and resin composition reinforcement properties of the flat cross-section glass fiber are impaired. When the content of $SiO_2$ is more than 60.00% by mass, the 1000 poise temperature and the liquid phase temperature of the glass composition for flat cross-section glass fiber increase and manufacturing of flat cross-section glass fiber is made difficult.

The glass composition for flat cross-section glass fiber of the present embodiment has a content of $SiO_2$ with respect to the total amount of the glass composition for flat cross-section glass fiber preferably in the range of 50.50 to 56.60% by mass, more preferably in the range of 51.00 to 54.44% by mass, still more preferably in the range of 52.00 to 54.40% by mass, particularly preferably in the range of 53.00 to 54.35% by mass, and most preferably in the range of 53.60 to 54.30% by mass.

When the glass composition for flat cross-section glass fiber of the present embodiment has a content of $Al_2O_3$ of less than 9.00% by mass with respect to the total amount of the glass composition for flat cross-section glass fiber, the mechanical strength of the flat cross-section glass fiber formed from the glass composition for flat cross-section glass fiber is greatly reduced and resin composition reinforcement properties of the flat cross-section glass fiber are impaired. When the content of $Al_2O_3$ is more than 18.00% by mass, the 1000 poise temperature and the liquid phase temperature of the glass composition for flat cross-section glass fiber increase and manufacturing of flat cross-section glass fiber is made difficult.

The glass composition for flat cross-section glass fiber of the present embodiment has a content of $Al_2O_3$ with respect to the total amount of the glass composition for flat cross-section glass fiber preferably in the range of 12.00 to 16.00% by mass, more preferably in the range of 12.50 to 15.50% by mass, still more preferably in the range of 13.00 to 15.00% by mass, particularly preferably in the range of 13.50 to 14.50% by mass, and most preferably in the range of 13.75% by mass to 14.25% by mass.

When the glass composition for flat cross-section glass fiber of the present embodiment has a content of $B_2O_3$ of less than 3.00% by mass with respect to the total amount of the glass composition for flat cross-section glass fiber, the viscosity at high temperatures of a molten product of the glass composition for flat cross-section glass fiber increases and a devitrified product is more easily formed in the bushing, which devitrified product is responsible for cut of the glass filaments constituting the flat cross-section glass fiber during glass fiber spinning or responsible for generation of glass fiber including the devitrified product. When the content of $B_2O_3$ is more than 9.00% by mass, in the case where the amount of a volatile component from a molten product of the glass composition for flat cross-section glass fiber increases and thus the operation period extends for a long period, which leads to deterioration of spinning productivity or shortening of the furnace life, and thus desired productivity cannot be achieved.

The glass composition for flat cross-section glass fiber of the present embodiment has a content of $B_2O_3$ with respect to the total amount of the glass composition for flat cross-section glass fiber preferably in the range of 4.60 to 7.90% by mass, more preferably in the range of 4.70 to 7.00% by mass, still more preferably in the range of 4.80 to 6.80% by mass, particularly preferably in the range of 5.00 to 6.50% by mass, especially preferably in the range of 5.10 to 6.4% by mass, and most preferably in the range of 5.55 to 5.94% by mass.

When the glass composition for flat cross-section glass fiber of the present embodiment has a content of CaO of less than 15.00% by mass with respect to the total amount of the glass composition for flat cross-section glass fiber, the viscosity at high temperatures of a molten product of the glass composition for flat cross-section glass fiber increases and thus the flattening ratio stability and the flattening stability deteriorate. When the content of CaO is more than 30.00% by mass, a devitrified product is more easily formed in the bushing, which devitrified product is responsible for cut during spinning or responsible for glass fiber including the devitrified product.

The glass composition for flat cross-section glass fiber of the present embodiment has a content of CaO with respect to the total amount of the glass composition for flat cross-section glass fiber preferably in the range of 20.00 to 28.00% by mass, more preferably in the range of 20.50 to 26.0% by mass, still more preferably in the range of 21.00 to 25.00% by mass, particularly preferably in the range of 21.50 to 24.50% by mass, and most preferably in the range of 22.00 to 24.00% by mass.

When the glass composition for flat cross-section glass fiber of the present embodiment has a content of MgO of less than 0.10% by mass with respect to the total amount of the glass composition for flat cross-section glass fiber, the viscosity at high temperatures of a molten product of the glass composition for flat cross-section glass fiber increases and thus the flattening ratio stability and the flattening stability deteriorate. When the content of MgO is more than 5.00% by mass, striae occur in a molten product of the glass composition for flat cross-section glass fiber and the glass filaments constituting the flat cross-section glass fiber may be more easily cut during spinning.

The glass composition for flat cross-section glass fiber of the present embodiment has a content of MgO with respect to the total amount of the glass composition for flat cross-section glass fiber preferably in the range of 0.20 to 2.90% by mass, more preferably in the range of 0.50 to 2.50% by mass, still more preferably in the range of 0.80 to 2.40% by mass, particularly preferably in the range of 0.90 to 2.30% by mass, especially preferably in the range of 1.00 to 2.20% by mass, and most preferably in the range of 1.10 to 2.10% by mass.

When the glass composition for flat cross-section glass fiber of the present embodiment has a content of, $Fe_2O_3$ of less than 0.01% by mass with respect to the total amount of the glass composition for flat cross-section glass fiber, debubbling properties in a molten product of the glass composition for flat cross-section glass fiber are reduced and cut due to bubbles may be more easily caused in the glass filaments constituting the flat cross-section glass fiber during spinning. When the content of $Fe_2O_3$ is more than 1.00% by mass, a molten product of the glass composition for flat cross-section glass fiber is colored and this coloration makes the absorbability of radiation heat ununiform, to cause deterioration of the melting uniformity of the molten product of the glass composition for flat cross-section glass fiber, and thus the flattening ratio stability and the flattening stability deteriorate.

The glass composition for flat cross-section glass fiber of the present embodiment has a content of $Fe_2O_3$ with respect to the total amount of the glass composition for flat cross-section glass fiber preferably in the range of 0.05 to 0.90% by mass, more preferably in the range of 0.10 to 0.60% by mass, still more preferably in the range of 0.15 to 0.55% by mass, particularly preferably in the range of 0.18 to 0.45% by mass, especially preferably in the range of 0.20 to 0.42% by mass, and most preferably in the range of 0.21 to 0.40% by mass.

When the glass composition for flat cross-section glass fiber of the present embodiment has a content of $TiO_2$ of less than 0.01% by mass with respect to the total amount of the glass composition for flat cross-section glass fiber, the viscosity at high temperatures of a molten product of the glass composition for flat cross-section glass fiber increases and thus the flattening ratio stability and the flattening stability deteriorate. When the content of $TiO_2$ is more than 1.00% by mass, the 1000 poise temperature and the liquid phase temperature of the glass composition for flat cross-section glass fiber increase and manufacturing of flat cross-section glass fiber is made difficult.

The glass composition for flat cross-section glass fiber of the present embodiment has a content of $TiO_2$ with respect to the total amount of the glass composition for flat cross-section glass fiber preferably in the range of 0.05 to 0.90% by mass, more preferably in the range of 0.06 to 0.50% by mass, still more preferably in the range of 0.07 to 0.35% by mass, particularly preferably in the range of 0.08 to 0.24% by mass, especially preferably in the range of 0.09 to 0.22% by mass, and most preferably in the range of 0.10 to 0.20% by mass.

It is difficult in the case of use of a mineral material as a glass raw material to allow the total content of $Na_2O$ and $K_2O$ with respect to the total amount of the glass composition for flat cross-section glass fiber in the glass composition for flat cross-section glass fiber of the present embodiment to be less than 0.10% by mass. When the total content of $Na_2O$ and $K_2O$ is more than 2.00% by mass, the mechanical strength of the flat cross-section glass fiber formed from the glass composition for flat cross-section glass fiber is greatly reduced and resin composition reinforcement properties of the flat cross-section glass fiber are impaired.

The glass composition for flat cross-section glass fiber of the present embodiment has a total content of $Na_2O$ and $K_2O$ with respect to the total amount of the glass composition for flat cross-section glass fiber preferably in the range of 0.20 to 1.80% by mass, more preferably in the range of 0.30 to 1.50% by mass, still more preferably in the range of 0.40 to 1.20% by mass, particularly preferably in the range of 0.51 to 1.10% by mass, and most preferably in the range of 0.60 to 0.94% by mass.

When the ratio ($K_2O/Na_2O$) of the content of $K_2O$ to the content of $Na_2O$ in the glass composition for flat cross-section glass fiber of the present embodiment is less than 0.05, the fiber formability of a molten product of the glass composition for flat cross-section glass fiber deteriorates and the surface tension of a molten product of the glass composition for flat cross-section glass fiber increases to result in deterioration of the flattening ratio stability of the glass composition for flat cross-section glass fiber. When the ratio ($K_2O/Na_2O$) of the content of $K_2O$ to the content of $Na_2O$ is more than 0.50, sufficient refining of a molten product of the glass composition for flat cross-section glass fiber is made difficult and the flattening stability of the glass composition for flat cross-section glass fiber deteriorates.

The ratio ($K_2O/Na_2O$) of the content of $K_2O$ to the content of $Na_2O$ in the glass composition for flat cross-section glass fiber of the present embodiment is preferably in the range of 0.07 or more and 0.44 or less, more preferably in the range of 0.08 or more and 0.40 or less, still more preferably in the range of 0.09 or more and 0.36 or less, particularly preferably in the range of 0.10 or more and 0.035 or less, especially preferably in the range of 0.11 or more and 0.33 or less, and most preferably in the range of 0.12 or more and 0.32 or less.

When the ratio ($MgO/Fe_2O_3$) of the content of MgO to the content of $Fe_2O_3$ in the glass composition for flat cross-section glass fiber of the present embodiment is less than 4.10, a molten product of the glass composition for flat cross-section glass fiber is colored to cause deterioration of molting properties of the molten product and deterioration of the flattening ratio stability. When the ratio ($MgO/Fe_2O_3$) of the content of MgO to the content of $Fe_2O_3$ is 10.00 or more, molting properties of a molten product of the glass composition for flat cross-section glass fiber deteriorate and the flattening ratio stability deteriorates.

The ratio ($MgO/Fe_2O_3$) of the content of MgO to the content of $Fe_2O_3$ in the glass composition for flat cross-section glass fiber of the present embodiment is preferably in the range of 4.30 to 9.94, more preferably in the range of 6.60 to 9.40, and still more preferably in the range of 7.10 to 8.90.

When the value of $(C \times M \times T/NK)^{1/2}$ in the glass composition for flat cross-section glass fiber of the present embodiment is less than 3.00, the amount of a volatile component from a molten product of the glass composition for flat cross-section glass fiber, which is responsible for cut of the glass filaments constituting the flat cross-section glass fiber during glass fiber spinning, tends to increase and the glass fiber spinning stability deteriorates. When the value of $(C \times M \times T/NK)^{1/2}$ is more than 3.75, a Cr-based crystal substance which is responsible for cut of the glass filaments constituting the flat cross-section glass fiber during glass fiber spinning, specifically, an uvarovite crystal tends to be easily generated and the glass fiber spinning stability deteriorates.

The value of $(C \times M \times T/NK)^{1/2}$ in the glass composition for flat cross-section glass fiber of the present embodiment is preferably in the range of 3.03 to 3.65, more preferably in the range of 3.04 to 3.40, and still more preferably in the range of 3.05 to 3.15.

The glass composition for flat cross-section glass fiber of the present embodiment may include $F_2$ in the range of 0% by mass or more and less than 1.00% by mass with respect to the total amount of the glass composition for flat cross-section glass fiber. The glass composition for flat cross-section glass fiber of the present embodiment has a content of $F_2$ of preferably less than 0.10% by mass, more preferably less than 0.01% by mass, still more preferably 0.004% by mass or less, and particularly preferably 0% by mass with respect to the total amount of the glass composition for flat cross-section glass fiber, from the viewpoint of reducing environmental loads.

The glass composition for flat cross-section glass fiber of the present embodiment may include ZnO in the range of 0% by mass or more and less than 3.00% by mass with respect to the total amount of the glass composition for flat cross-section glass fiber. When the glass composition for flat cross-section glass fiber of the present embodiment includes ZnO, the content of ZnO with respect to the total amount of the glass composition for flat cross-section glass fiber is preferably in the range of less than 2.50% by mass, more preferably in the range of less than 1.50% by mass, still more preferably in the range of less than 0.50% by mass, particularly preferably in the range of less than 0.10% by mass, especially preferably in the range of less than 0.05% by mass, and most preferably in the range of less than 0.01% by mass.

The glass composition for flat cross-section glass fiber of the present embodiment can be prepared by mixing a glass recycling material in the range of 1.0 to 50.0% by mass with respect to the total amount of the glass composition for flat cross-section glass fiber, with a mineral material or an ore-derived purified material. In order that the glass composition for flat cross-section glass fiber of the present embodiment has the above glass composition based on components included in the glass recycling material, and the mineral material or the ore-derived purified material, the content of each component, and the amount of each component volatilized in the melting process during formation of a glass raw material, the content ratio of the glass recycling material and the mineral material or the ore-derived purified material is determined.

Examples of the glass recycling material can include waste glass fiber by reason of cut, quality deficiencies, standard incompatibility, and the like in the manufacturing process of glass fiber, or glass fiber recovered from a glass fiber-reinforced resin composition, which is pulverized after removal of any organic component attached onto the surface, by burning or the like. The glass recycling material is preferably, for example, a glass recycling material recovered from a glass fiber-reinforced resin composition including E glass fiber.

Examples of the mineral material can include silica sand, feldspar, clay, and limestone, and examples of the ore-derived purified material can include silica powder, dolomite, talc, clay, alumina, and soda ash.

The glass composition for flat cross-section glass fiber of the present embodiment may include, as impurities derived from the glass raw material including a glass recycling material, oxides of Ba, Co, Ni, Cu, Mo, Sr, Nb, W, Ce, Y, La, Bi, Gd, Pr, Sc, or, Yb in the range of 3.00% by mass or less in total with respect to the total amount of the glass composition for flat cross-section glass fiber. The glass composition for flat cross-section glass fiber of the present embodiment has a content of the impurities of preferably 2.00% by mass or less and more preferably less than 1.00% by mass with respect to the total amount of the glass composition for flat cross-section glass fiber.

Particularly when the glass composition for flat cross-section glass fiber of the present embodiment includes $BaO$, $CuO$, $SrO$, $Ni_2O_3$, $Nb_2O_4$, $WO_3$, $CeO_2$, $Y_2O_3$, $La_2O_3$, $Bi_2O_3$, $Gd_2O_3$, $Pr_2O_3$, $Sc_2O_3$, or $Yb_2O_3$ as impurities, the content of each of the impurities with respect to the total amount of the glass composition for flat cross-section glass fiber is independently preferably in the range of less than 0.40% by mass, more preferably in the range of less than 0.20% by mass, still more preferably in the range of less than 0.10% by mass, markedly preferably in the range of less than 0.05% by mass, particularly preferably in the range of less than 0.04% by mass or less, especially preferably in the range of less than 0.015% by mas, and most preferably in the range of less than 0.01% by mass.

Regarding measurement of the content of each component in the glass composition for flat cross-section glass fiber of the present embodiment, the content of Li as the light element can be measured with an ICP emission spectroscopic analyzer. The contents of the other elements can be measured with a wavelength dispersive X-ray fluorescence analyzer.

Examples of the measurement method can include the following method. First, a glass batch is placed in a platinum crucible, and while held in an electric furnace at a temperature of 1650°C for 6 hours, is melted with stirring to obtain a homogeneous molten glass. Alternatively, glass fiber is placed in a platinum crucible, and while held in an electric furnace at a temperature of 1650°C for 6 hours, is melted with stirring to obtain a homogeneous molten glass.

The glass batch is prepared by mixing a glass raw material. When organic matter is attached on a glass fiber surface or the glass fiber is included as a reinforcing material in organic matter (resin), the glass fiber is heated, for example, in a muffle furnace at 300 to 650°C for about 0.5 to 24 hours to remove the organic matter and then is used.

Next, the obtained molten glass is poured onto a carbon plate to produce a glass cullet, and then the glass cullet is pulverized and powdered to obtain glass powder.

Next, regarding Li as a light element, the glass powder is thermally decomposed with an acid and then quantitatively analyzed using an ICP emission spectroscopic analyzer. Regarding other elements, the glass powder is molded into a disc shape by a pressing machine and then quantitatively analyzed using a wavelength dispersive X-ray fluorescence analyzer. The quantitative analysis with a wavelength dispersive X-ray fluorescence analyzer can be made specifically by producing a sample for a calibration curve, based on results measured by a fundamental parameter method and performing a calibration curve method. The content of each component in the sample for a calibration curve can be quantitatively analyzed with an ICP emission spectroscopic analyzer. These quantitative analysis results are converted in terms of oxides to calculate the content of each component and the total amount, and the above content (% by mass) of each component can be determined from these numerical values.

Next, the flat cross-section glass fiber of the present embodiment is flat cross-section glass fiber including a plurality of flat cross-section glass filaments each having a flat cross-sectional shape comprising a major axis having a length in a predetermined range and a minor axis having a length in a predetermined range, in which the flat cross-section glass filaments are each formed from the glass composition for flat cross-section glass fiber of the present embodiment.

The flat cross-section glass fiber of the present embodiment can be manufactured by the method for manufacturing flat cross-section glass fiber from a glass raw material including a glass recycling material of the present embodiment, the method including: obtaining a flat cross-section glass filament having a flat cross-sectional shape comprising a major axis having a length in a predetermined range and a minor axis having a length in a predetermined range by using a glass raw material including a glass recycling material; and bundling a plurality of the flat cross-section glass filaments.

In the method for manufacturing flat cross-section glass fiber from a glass raw material including a glass recycling material of the present embodiment, the glass raw material includes a glass recycling material in the range of 1.0 to 50.0% by mass with respect to the total amount, and the flat cross-section glass filament is formed from the glass composition for flat cross-section glass fiber of the present embodiment.

The flat cross-section glass fiber of the present embodiment can be formed from, for example, the glass composition for flat cross-section glass fiber of the present embodiment, as follows. First, a glass raw material prepared so as to allow a molten glass raw material to have the above composition is supplied to a melting furnace, and is melted at a temperature range of 1000 poise temperature or more, specifically, a temperature range of 1450 to 1650°C. The molten glass melted at the temperature is discharged from 1 to 8000 nozzle tips or holes controlled at a predetermined temperature and cooled while stretched by winding at high speed to be solidified into glass fiber.

Glass single fiber (glass filament) discharged from one nozzle tip or hole, and cooled and solidified typically has a perfect circle cross-sectional shape and has a diameter in the range of 2.0 to 35.0 $\mu$m. On the other hand, when the above nozzle tip has a non-circular shape and has a protrusion or a notch for rapidly cooling the molten glass, controlling the temperature condition can provide the flat cross-section glass filament of the present embodiment, having a flat cross-sectional shape of a non-circular shape (e.g., ellipse or oval). The non-circular shape is, for example, an ellipse or oval shape (rectangular shape of which short sides each are replaced with a semicircle having a diameter equivalent to the short sides).

In the flat cross-section glass filament of the present embodiment, the ratio (major axis/minor axis) of the major axis to the minor axis of the cross-sectional shape is, for example, in the range of 2.0 to 10.0 and the fiber diameter in conversion of the cross-sectional area into a perfect circle (converted fiber diameter) is, for example, in the range of 2.0 to 35.0 $\mu$m.

The flat cross-section glass fiber of the present embodiment is typically in the form of a glass fiber bundle (glass strand) in which the flat cross-section glass filaments in the range of 10 to 8000 filaments are bundled, and comprises, for example, a weight in the range of 0.3 to 10000.0 tex (g/km) and an elastic modulus in the range of 70.0 to 79.4 GPa. The elastic modulus in the flat cross-section glass fiber of the present embodiment can be measured, for example, as follows.

First, the flat cross-section glass fiber of the present embodiment is placed in a platinum crucible, and while held in an electric furnace at a temperature of 1600°C for 6 hours, is melted with stirring to obtain a homogeneous molten glass. When the flat cross-section glass fiber of the present embodiment is included in a glass fiber-reinforced resin composition, flat cross-section glass fiber obtained by heating the glass fiber-reinforced resin composition, for example, in a muffle furnace at 300 to 650°C for about 0.5 to 24 hours to decompose the organic matter is used.

Next, the obtained molten glass is poured onto a carbon plate to produce a glass cullet, then the obtained glass cullet is loaded into a small-size cylindrical platinum bushing having one circular nozzle tip at the container bottom, and the bushing is heated to a predetermined temperature so that the viscosity of the loaded glass cullet is 1000 $\pm$ 150 poise, to melt the glass cullet, thereby obtaining a molten glass.

Next, the molten glass discharged from such one nozzle tip of the platinum bushing is wound at a predetermined speed by a winding machine so that the glass fiber diameter is 13 $\pm$ 2 $\mu$m, and is cooled while stretched to be solidified to obtain glass fiber comprising a circular cross section of a perfect circle. One fiber (monofilament) between the nozzle tip of the platinum bushing and the winding machine is collected, and a monofilament in the state of being suppressed in degradation due to contact or friction as much as possible is sorted.

Next, the obtained monofilament is disposed in the long side direction so as to be aligned with a line connecting the center points of short sides of a mount comprising two grip sections and two support sections described below, and then is bonded, to produce a monofilament test piece. Next, the diameter of the obtained monofilament is measured with a scanning electron microscope (trade name: S-3400 manufactured by Hitachi Ltd.), and the cross-sectional area of the monofilament is calculated from the obtained diameter.

Next, the two grip sections in the mount are installed on upper and lower grip tools of a tensile tester (trade name: desktop material testing machine STB-1225S manufactured by A&D Co., Ltd.), the distance between the grip tools being set to 50 mm, the two support sections in the mount are cut and removed to provide a state in which the grip sections are connected by only the monofilament, and then a tensile test is performed at a crosshead speed of 5 mm/min. Next, the respective stresses corresponding to the strains between two points, $\varepsilon 1 = 0.0005$ and $\varepsilon 2 = 0.0025$, are defined as $\sigma 1$ and $\sigma 2$, and the difference in stress ($\sigma 2 - \sigma 1$) is divided by the difference in strain ($\varepsilon 2 - \varepsilon 1$) to calculate the tensile elastic modulus. The elastic modulus of the flat cross-section glass fiber of the present embodiment can be measured by excluding a monofilament test piece in which filament failing occurs during measurement and calculating the average value of the tensile elastic moduli at n = 15.

The mount comprises short sides of 25 mm and long sides of 75 mm, comprises, on the center of the internal section, a cutout section with short sides of 15 mm and long sides of 50 mm so that the short sides and the long sides of the mount are respectively in parallel with the short sides and the long sides of the cutout section, comprises grip sections to be installed to grip tools of a tensile tester, between the short sides and the long sides of the cutout section, and also comprises a support section connecting and supporting the two grip sections, between the long sides of the cutout section and the long sides of the mount.

The flat cross-section glass fiber of the present embodiment can take any of various forms such as a yarn, a woven fabric, a knit fabric, a non-woven fabric, a chopped strand, a roving, and powder, obtained by variously processing the glass strand. The non-woven fabric encompasses a chopped strand mat and a multiaxial non-woven fabric.

The chopped strand is one obtained by cutting glass fiber formed with a plurality of bundled glass filaments, to a length in the range of 1 to 25 mm. The chopped strand is typically distributed as a plurality of glass fiber cut pieces cut as described above and accommodated in a pouched package.

The roving is glass fiber formed with a plurality of bundled glass filaments and continuously wound. The roving is typically distributed in a state in which glass fiber having a length of 1000 m or more is wound around a core.

The flat cross-section glass fiber of the present embodiment may be coated with an organic matter on the surface thereof for the purposes such as improvement of glass filament bundling properties, improvement of adhesiveness between glass fiber and a resin and improvement of uniform dispersibility of flat cross-section glass fiber in a mixture of flat cross-section glass fiber and a resin or an inorganic material. Examples of such an organic matter can include starch, a urethane resin, an epoxy resin, a vinyl acetate resin, an acrylic resin, modified polypropylene (in particular, carboxylic acid-modified polypropylene), and a copolymer of (poly)carboxylic acid (in particular, maleic acid) and an unsaturated monomer.

The flat cross-section glass fiber of the present embodiment may also be coated with a resin composition including a silane coupling agent, a lubricant, a surfactant, and the like, in addition to such a resin. The flat cross-section glass fiber of the present embodiment may also be coated with a treatment agent composition not including the resin, but including a silane coupling agent, a surfactant, and the like. Such a resin composition or such a treatment agent composition covers the flat cross-section glass fiber at a rate in the range of 0.1 to 2.0% by mass based on the mass of the flat cross-section glass fiber of the present embodiment in a state where it is not coated with the resin composition or the treatment agent composition. The flat cross-section glass fiber can be coated with the organic matter by providing a resin solution or a resin composition solution to the flat cross-section glass fiber using a known method such as a roller applicator, for example, in the manufacturing process of the flat cross-section glass fiber and then drying the flat cross-section glass fiber to which the resin solution or the resin composition solution is provided. The flat cross-section glass fiber of the present embodiment, which is in the form of a woven fabric, can be coated with the organic matter by immersing the flat cross-section glass fiber in a treatment agent composition solution and then drying the flat cross-section glass fiber to which the treatment agent composition is provided.

Examples of the silane coupling agent can include aminosilanes, chlorosilanes, epoxysilanes, mercaptosilanes, vinylsilanes, acrylsilanes, and cationic silanes. As the silane coupling agent, these compounds can be used singly or in combination of two or more.

Examples of the aminosilane include γ-aminopropyltriethoxysilane, N-β-(aminoethyl)-γ-aminopropyltrimethoxysilane, N-β-(aminoethyl)-N'-β-(aminoethyl)-γ-aminopropyltrimethoxysilane, and γ-anilinopropyltrimethoxysilane.

Examples of the chlorosilane include γ-chloropropyltrimethoxysilane.

Examples of the epoxysilane include γ-glycidoxypropyltrimethoxysilane and β-(3,4-epoxy cyclohexyl)ethyltrimethoxysilane.

Examples of the mercaptosilane can include γ-mercaptotrimethoxysilane.

Examples of the vinylsilane include vinyl trimethoxysilane and N-β-(N-vinylbenzylaminoethyl)-γ-aminopropyltrimethoxysilane.

Examples of the acrylsilane include γ-methacryloxypropyltrimethoxysilane.

Examples of the cationic silane include N-(vinylbenzyl)-2-aminoethyl-3-aminopropyltrimethoxysilane hydrochloride and N-phenyl-3-aminopropyltrimethoxysilane hydrochloride.

Examples of the lubricant include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. As the lubricant, these can be used singly or in combinations of two or more.

Examples of the animal oil include beef tallow.

Examples of the vegetable oil include soybean oil, coconut oil, rapeseed oil, palm oil, and castor oil.

Examples of the animal wax include beeswax and lanolin.

Examples of the vegetable wax include candelilla wax and carnauba wax.

Examples of the mineral wax include paraffin wax and montan wax.

Examples of the condensate of a higher saturated fatty acid and a higher saturated alcohol include stearates such as lauryl stearate.

Examples of the fatty acid amide include dehydrated condensates of a polyethylenepolyamine such as diethylenetriamine, triethylenetetramine, or tetraethylenepentamine and a fatty acid such as lauric acid, myristic acid, palmitic acid, or stearic acid.

Examples of the quaternary ammonium salt include alkyltrimethylammonium salts such as lauryltrimethylammonium chloride.

Examples of the surfactant can include nonionic surfactants, cationic surfactants, anionic surfactants, and amphoteric surfactants. As the surfactant, these can be used singly or in combination of two or more.

Examples of the nonionic surfactant can include ethylene oxide propylene oxide alkyl ether, polyoxyethylene alkyl ether, polyoxyethylene-polyoxypropylene-block copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant can include alkyldimethylbenzylammonium chloride, alkyltrimethylammonium chloride, alkyl dimethyl ethyl ammonium ethyl sulfate, higher alkylamine acetate, higher alkylamine hydrochloride, adduct of ethylene oxide to a higher alkylamine, condensate of a higher fatty acid and polyalkylene polyamine, a salt of an ester of a higher fatty acid and alkanolamine, a salt of higher fatty acid amide, imidazoline cationic surfactant, and alkyl pyridinium salt.

Examples of the anionic surfactant can include higher alcohol sulfate salts, higher alkyl ether sulfate salts, $\alpha$-olefin sulfate salts, alkylbenzene sulfonate salts, $\alpha$-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct. Examples of the amphoteric surfactant can include amino acid amphoteric surfactants such as alkali metal salts of alkylaminopropionic acid, betaine amphoteric surfactants such as alkyldimethylbetaine, and imidazoline amphoteric surfactants.

Examples and Comparative Examples of the present invention will be shown.

Examples

[Examples 1 to 6, and, Comparative Examples 1 to 6]

First, ore-derived purified materials and glass recycling materials were adjusted to prepare each glass raw material comprising a composition shown in Table 1, of Examples 1 to 6, and each glass raw material comprising a composition shown in Table 1, of Comparative Examples 1 to 6. Each of the glass raw materials includes 10.0% by mass of the glass recycling material with respect to the total amount. The glass recycling material is a glass recycling material recovered from a glass fiber-reinforced resin composition including E glass fiber.

Next, each of the glass raw materials described above was melted to obtain a molten glass, and then the obtained molten glass was withdrawn from a bushing comprising 400 nozzle tips at a flow rate of the molten glass passing through one nozzle, of 1.3 g/min or 1.5 g/min, to obtain a plurality of flat cross-sectional (oval cross-sectional) glass filaments. A plurality of the flat cross-sectional (oval cross-sectional) glass filaments was bundled to manufacture flat cross-sectional (oval cross-sectional) glass fiber.

The nozzle tip comprises a hole section having a flat cross-sectional shape in which the length of the minor axis is 1.0 mm and the ratio (minor axis/major axis) of the length of the major axis to the length of the minor axis is 4.0, and a wall section comprising a notch for cooling a molten glass.

Next, the flattening stability, the flattening ratio stability and the glass fiber spinning stability of the flat cross-section glass fiber obtained in each of Examples and Comparative Examples were evaluated as follows. The results are shown in Table 1 and Table 2.

[Flattening stability]

When the flat cross-section glass fiber was manufactured by melting the glass raw material, withdrawing the obtained molten glass from a bushing comprising 400 nozzle tips at a flow rate of the molten glass passing through one nozzle, of 1.5 g/min, to obtain 400 flat cross-section glass filaments and bundling these flat cross-section glass filaments, a case where the average value of the ratio (major axis/minor axis) of the major axis to the minor axis of the 400 flat cross-section glass filaments constituting the flat cross-section glass fiber was 3.0 or more was evaluated as "OK" and a case where the average value was less than 3.0 was evaluated as "NG".

[Flattening ratio stability]

When the flat cross-section glass fiber was manufactured by melting the glass raw material, withdrawing the obtained molten glass from a bushing comprising 400 nozzle tips at a flow rate of the molten glass passing through one nozzle, of 1.3 g/min, to obtain 400 flat cross-section glass filaments and bundling these flat cross-section glass filaments, a case where a flat cross-section glass filament in which the ratio (major axis/minor axis) of the major axis to the minor axis of the flat cross-section glass filament was 2.0 or less was not included at all in the 400 flat cross-section glass filaments constituting the flat cross-section glass fiber was evaluated as "OK" and a case where even one flat cross-section glass filament in which the ratio (major axis/minor axis) of the major axis to the minor axis of the flat cross-section glass filament was 2.0 or less was included in the 400 flat cross-section glass filaments was evaluated as "NG".

[Glass fiber spinning stability]

When the flat cross-section glass fiber was manufactured continuously for 168 hours by melting the glass raw material, withdrawing the obtained molten glass from a bushing comprising 400 nozzle tips at a flow rate of the molten glass passing through one nozzle, of 1.3 g/min, to obtain 400 flat cross-section glass filaments and bundling these flat cross-section glass filaments, a case where the number of cuts of the flat cross-section glass filaments constituting the flat cross-section glass fiber is 105 or less was evaluated as "OK" and a case where the number of cuts of the flat cross-section glass filaments constituting the flat cross-section glass fiber is more than 105 was evaluated as "NG".

[Table 1]

| | Example 1 | Example 2 | Example 3 | Example 4 | Example 5 | Example 6 |
|---|---|---|---|---|---|---|
| $SiO_2$ (% by mass) | 54.10 | 53.70 | 53.90 | 53.70 | 54.30 | 55.20 |
| $Al_2O_3$ (% by mass) | 13.90 | 13.70 | 13.80 | 13.70 | 13.70 | 13.80 |
| $B_2O_3$ (% by mass) | 5.50 | 5.70 | 5.60 | 5.70 | 5.50 | 5.20 |
| CaO (% by mass) ;C | 23.00 | 23.00 | 23.10 | 23.00 | 23.00 | 22.00 |
| MgO (% by mass) ;M | 1.90 | 1.90 | 1.90 | 1.90 | 1.60 | 1.30 |
| $Fe_2O_3$ (% by mass) | 0.22 | 0.26 | 0.26 | 0.26 | 0.19 | 0.30 |
| $TiO_2$ (% by mass) ;T | 0.17 | 0.19 | 0.17 | 0.19 | 0.29 | 0.30 |
| $Na_2O$ (% by mass) | 0.68 | 0.67 | 0.69 | 0.67 | 0.64 | 0.61 |
| $K_2O$ (% by mass) | 0.10 | 0.15 | 0.10 | 0.12 | 0.20 | 0.18 |
| $F_2$ (% by mass) | 0.00 | 0.00 | 0.00 | 0.00 | 0.00 | 0.49 |
| Other impurities (% by mass) | 0.43 | 0.73 | 0.48 | 0.76 | 0.58 | 0.62 |
| Total (% by mass) | 100.00 | 100.00 | 100.00 | 100.00 | 100.00 | 100.00 |
| $Na_2O+K_2O$ (% by mass) ;NK | 0.78 | 0.82 | 0.79 | 0.79 | 0.84 | 0.79 |
| $K_2O/Na_2O$ | 0.15 | 0.22 | 0.14 | 0.18 | 0.31 | 0.30 |
| $MgO/Fe_2O_3$ | 8.64 | 7.31 | 7.31 | 7.31 | 8.42 | 4.33 |
| $(C \times M \times T/NK)^{1/2}$ | 3.09 | 3.18 | 3.07 | 3.24 | 3.56 | 3.30 |
| Flattening stability | OK | OK | OK | OK | OK | OK |
| Flattening ratio stability | OK | OK | OK | OK | OK | OK |
| Glass fiber spinning stability | OK | OK | OK | OK | OK | OK |

[Table 2]

| | Comparative Example 1 | Comparative Example 2 | Comparative Example 3 | Comparative Example 4 | Comparative Example 5 | Comparative Example 6 |
|---|---|---|---|---|---|---|
| $SiO_2$ (% by mass) | 54.10 | 54.10 | 53.70 | 53.90 | 54.10 | 54.02 |
| $Al_2O_3$ (% by mass) | 13.90 | 13.90 | 13.70 | 13.80 | 14.10 | 14.29 |
| $B_2O_3$ (% by mass) | 5.50 | 5.50 | 5.50 | 5.50 | 6.10 | 6.65 |
| CaO (% by mass) ;C | 23.00 | 23.00 | 22.98 | 23.00 | 22.40 | 21.76 |
| MgO (% by mass) ;M | 1.90 | 1.90 | 2.52 | 1.90 | 1.20 | 1.20 |
| $Fe_2O_3$ (% by mass) | 0.22 | 0.22 | 0.22 | 0.52 | 0.20 | 0.27 |
| $TiO_2$ (% by mass) ;T | 0.17 | 0.17 | 0.17 | 0.17 | 0.30 | 0.21 |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| | $Na_2O$ (% by mass) | 0.78 | 0.39 | 0.68 | 0.68 | 0.40 | 0.52 |
| | $K_2O$ (% by mass) | 0.00 | 0.39 | 0.10 | 0.10 | 0.10 | 0.15 |
| | $F_2$ (% by mass) | 0.00 | 0.00 | 0.00 | 0.00 | 0.60 | 0.43 |
| | Other impurities (% by mass) | 0.43 | 0.43 | 0.43 | 0.43 | 0.50 | 0.50 |
| | Total (% by mass) | 100.00 | 100.00 | 100.00 | 100.00 | 100.00 | 100.00 |
| | $Na_2O+K_2O$ (% by mass) ;NK | 0.78 | 0.78 | 0.78 | 0.78 | 0.50 | 0.67 |
| | $K_2O/Na_2O$ | 0.00 | 1.00 | 0.15 | 0.15 | 0.25 | 0.29 |
| | $MgO/Fe_2O_3$ | 8.64 | 8.64 | 11.45 | 3.65 | 6.00 | 4.44 |
| | $(C{\times}M{\times}T/NK)^{1/2}$ | 3.09 | 3.09 | 3.55 | 3.09 | 4.02 | 2.86 |
| | Flattening stability | OK | NG | OK | OK | OK | OK |
| | Flattening ratio stability | NG | OK | NG | NG | OK | OK |
| | Glass fiber spinning stability | OK | OK | OK | OK | NG | NG |

As can be seen from Table 1, according to the flat cross-section glass fiber of each of Examples 1 to 6, including a plurality of flat cross-section glass filaments formed from the glass composition for flat cross-section glass fiber of the present invention, excellent flattening stability, flattening ratio stability and glass fiber spinning stability are comprised.

In contrast, as can be seen from Table 2, according to the flat cross-section glass fiber of Comparative Example 1, including a plurality of flat cross-section glass filaments formed from a glass composition for flat cross-section glass fiber, in which the ratio ($K_2O/Na_2O$) of the content of $K_2O$ to the content of $Na_2O$ is 0.00 which is less than 0.05, sufficient flattening ratio stability cannot be comprised, and according to the flat cross-section glass fiber of Comparative Example 2, including a plurality of flat cross-section glass filaments formed from a glass composition for flat cross-section glass fiber, in which the ratio ($K_2O/Na_2O$) of the content of $K_2O$ to the content of $Na_2O$ is 1.00 which is 0.50 or more, sufficient flattening stability cannot be comprised.

As can be seen from Table 2, according to the flat cross-section glass fiber of Comparative Example 3, including a plurality of flat cross-section glass filaments formed from a glass composition for flat cross-section glass fiber, in which the ratio ($MgO/Fe_2O_3$) of the content of MgO to the content of $Fe_2O_3$ is 11.45 which is 10.00 or more and the flat cross-section glass fiber of Comparative Example 4, including a plurality of flat cross-section glass filaments formed from a glass composition for flat cross-section glass fiber, in which the ratio ($MgO/Fe_2O_3$) of the content of MgO to the content of $Fe_2O_3$ is 3.65 which is less than 4.10, sufficient flattening ratio stability cannot be comprised.

It can be seen that, according to the flat cross-section glass fiber of Comparative Example 5, including a plurality of flat cross-section glass filaments formed from a glass composition for flat cross-section glass fiber, in which C, M, T, and NK do not satisfy the formula (1) and the value of $(C \times M \times T/NK)^{1/2}$ is 4.02 which is more than 3.75 and the flat cross-section glass fiber of Comparative Example 6, including a plurality of flat cross-section glass filaments formed from a glass composition for flat cross-section glass fiber, in which C, M, T, and NK do not satisfy the formula (1) and the value of $(C \times M \times T/NK)^{1/2}$ is 2.86 which is less than 3.00, sufficient glass fiber spinning stability cannot be comprised.

**Claims**

1. A glass composition for flat cross-section glass fiber, comprising:

   $SiO_2$ in a range of 50.00 to 60.00% by mass,
   $Al_2O_3$ in a range of 9.00 to 18.00% by mass,
   $B_2O_3$ in a range of 3.00 to 9.00% by mass,
   CaO in a range of 15.00 to 30.00% by mass,
   MgO in a range of 0.10 to 5.00% by mass,
   $Fe_2O_3$ in a range of 0.01 to 1.00% by mass,
   $TiO_2$ in a range of 0.01 to 1.00% by mass, and
   $Na_2O$ and $K_2O$ in a range of 0.10 to 2.00% by mass in total, with respect to a total amount of the glass composition for flat cross-section glass fiber, wherein
   a ratio $(K_2O/Na_2O)$ of a content of $K_2O$ to a content of $Na_2O$ is in a range of 0.05 or more and less than 0.50,
   a ratio $(MgO/Fe_2O_3)$ of a content of MgO to a content of $Fe_2O_3$ is in range of 4.10 or more and less than 10.00, and
   C, M, T, and NK satisfy following formula (1) when a content of CaO is designated as C, the content of MgO is designated as M, a content of $TiO_2$ is designated as T, and a total content of $Na_2O$ and $K_2O$ is designated as NK:

$$3.00 \le (C \times M \times T/NK)^{1/2} \le 3.75 \quad (1)$$

2. Flat cross-section glass fiber, comprising a plurality of flat cross-section glass filaments each having a flat cross-sectional shape comprising a major axis having a length in a predetermined range and a minor axis having a length in a predetermined range, wherein
   the flat cross-section glass filaments are each formed from the glass composition for flat cross-section glass fiber according to claim 1.

3. A method for manufacturing flat cross-section glass fiber from a glass raw material comprising a glass recycling material, the method comprising:

   obtaining a flat cross-section glass filament having a flat cross-sectional shape comprising a major axis having a length in a predetermined range and a minor axis having a length in a predetermined range by using a glass raw material comprising a glass recycling material; and
   bundling a plurality of the flat cross-section glass filaments, wherein
   the glass raw material comprises the glass recycling material in a range of 1.0 to 50.0% by mass with respect to a total amount, and
   the flat cross-section glass filament comprises $SiO_2$ in a range of 50.00 to 60.00% by mass, $Al_2O_3$ in a range of 9.00 to 18.00% by mass, $B_2O_3$ in a range of 3.00 to 9.00% by mass, CaO in a range of 15.00 to 30.00% by mass, MgO in a range of 0.10 to 5.00% by mass, $Fe_2O_3$ in a range of 0.01 to 1.00% by mass, $TiO_2$ in a range of 0.01 to 1.00% by mass, and $Na_2O$ and $K_2O$ in a range of 0.10 to 2.00% by mass in total, with respect to a total amount of the flat cross-section glass filament, a ratio $(K_2O/Na_2O)$ of a content of $K_2O$ to a content of $Na_2O$ is in a range of 0.05 or more and less than 0.50, a ratio $(MgO/Fe_2O_3)$ of a content of MgO to a content of $Fe_2O_3$ is in a range of 4.10 or more and less than 10.00, and a content C of CaO, a content M of MgO, a content T of $TiO_2$, and a total content NK of $Na_2O$ and $K_2O$ satisfy following formula (1):

$$3.00 \le (C \times M \times T/NK)^{1/2} \le 3.75 \quad (1)$$

## INTERNATIONAL SEARCH REPORT

| International application No. |
| --- |
| **PCT/JP2023/004190** |

| A. | CLASSIFICATION OF SUBJECT MATTER |
| --- | --- |

*C03C 13/02*(2006.01)i; *C03C 3/087*(2006.01)i
FI:   C03C13/02; C03C3/087

According to International Patent Classification (IPC) or to both national classification and IPC

| B. | FIELDS SEARCHED |
| --- | --- |

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023/276618 A1 (NITTO BOSEKI CO., LTD.) 05 January 2023 (2023-01-05) paragraphs [0050], [0054], [0062]-[0063], [0065]-[0068], [0125], [0129], examples 1-3, 5-10, 12-13, 15, 18-19 | 1-3 |
| X | WO 2023/276619 A1 (NITTO BOSEKI CO., LTD.) 05 January 2023 (2023-01-05) paragraphs [0052], [0055], [0057], [0063]-[0064], [0066]-[0069], examples 1, 4, 6-7 | 1-3 |
| A | JP 2014-234319 A (NIPPON ELECTRIC GLASS CO., LTD.) 15 December 2014 (2014-12-15) entire text | 1-3 |
| A | JP 2003-054993 A (NITTO BOSEKI CO., LTD.) 26 February 2003 (2003-02-26) entire text | 1-3 |
| A | US 6136735 A (GALLO, M. H. et al.) 24 October 2000 (2000-10-24) entire text | 1-3 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 585 576 A1

| INTERNATIONAL SEARCH REPORT | International application No. |
| Information on patent family members | PCT/JP2023/004190 |

| Patent document cited in search report | | | Publication date (day/month/year) | Patent family member(s) | | | Publication date (day/month/year) |
|---|---|---|---|---|---|---|---|
| WO | 2023/276618 | A1 | 05 January 2023 | JP | 7207621 | B1 | |
| WO | 2023/276619 | A1 | 05 January 2023 | (Family: none) | | | |
| JP | 2014-234319 | A | 15 December 2014 | (Family: none) | | | |
| JP | 2003-054993 | A | 26 February 2003 | WO | 1999/001393 | A1 | |
| US | 6136735 | A | 24 October 2000 | WO | 1999/012858 | A1 | |
| | | | | EP | 951457 | A1 | |
| | | | | FR | 2768144 | A1 | |
| | | | | NO | 992227 | D | |
| | | | | BR | 9806170 | A | |
| | | | | CZ | 166499 | A | |
| | | | | SK | 62799 | A | |
| | | | | TR | 199901012 | T | |
| | | | | NZ | 335674 | A | |
| | | | | AU | 9166698 | A | |
| | | | | AT | 228103 | T | |
| | | | | ES | 2187059 | T | |
| | | | | CA | 2272001 | A | |
| | | | | TW | 570906 | B | |
| | | | | RU | 2232729 | C | |
| | | | | UA | 63917 | C | |
| | | | | CN | 1243501 | A | |
| | | | | KR | 10-0544804 | B1 | |
| | | | | AR | 13483 | A | |
| | | | | MY | 115601 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017171101 A